# EUROPEAN PATENT APPLICATION

(11) **EP 3 309 125 A1**
(43) Date of publication of application: **18.04.2018**
(21) Application number: 17195773.1
(22) Date of filing: 10.10.2017
(51) Int. Cl.: C01B 25/00, C01B 32/18

(54) **METHOD FOR PREPARING LITHIUM IRON PHOSPHATE MATERIAL COATED WITH CARBON NANORIBBON**

(30) Priority: 12.10.2016 CN 201610891065
(71) Applicant: Optimum Battery Co., Ltd., Shenzhen City, Guangdong 518118 (CN)
(72) Inventor: YANG, Guo long, Shenzhen, Guangdong 518118 (CN); WANG, Hai tao, Shenzhen, Guangdong 518118 (CN)
(74) Representative: Fry, Emma Leland

(57) **Abstract**

The present application provides a method for preparing a lithium iron phosphate material coated with carbon nanoribbon, including the steps of: 1) fully and uniformly dispersing carbon nanoribbons in an aqueous solution by means of stirring and ultrasonic dispersion, and obtaining a mixture; 2) adding a lithium source, an iron source and a phosphorous source at a molar ratio of Li: Fe: P = 1:1:1 into the mixture of step 1) under the protection of inert gas, adding water and stirring to form a slurry, and refluxing the slurry; 3) washing and drying the slurry to obtain a primary lithium iron phosphate material coated with carbon nanoribbon; and 4) annealing the primary lithium iron phosphate material coated with carbon nanoribbon of step 3) at high-temperature in a protective atmosphere of argon containing 5-10%v/v of hydrogen, and obtaining the lithium iron phosphate material coated with carbon nanoribbon.

## Description

### BACKGROUND OF THE INVENTION

### FIELD OF THE INVENTION

The present application generally relates to batteries and, more particularly, to a method for preparing a lithium iron phosphate material coated with carbon nanoribbon.

### DESCRIPTION OF THE RELATED ART

As a green and environment-friendly energy, lithium iron phosphate (LiFePO₄ batteries have become an important choice for power batteries due to high safety performance, desirable high temperature characteristics, long cycle life, wide source and low price. However, the lithium iron phosphate has poor electronic conductivity and low lithium ion diffusion property, which lead to undesirable electrochemical performances of the batteries.

The lithium iron phosphate is generally modified via carbon coating technology. In the conventional carbon-coated lithium iron phosphate, the lithium iron phosphate is coated with a conventional carbon source. The coated lithium iron phosphate has a general conductivity, and the mass content of the carbon coating is usually high as 5% or even 10%. The use of a large amount of carbon materials can promote the dissolution of the electrode active material and the oxidation of the electrolyte on the surface of thereof, which may deteriorate the cycle performance of the electrode and increase irreversible capacity.

In recent years, carbon nanotube and graphene are two kinds of materials used for coating lithium iron phosphate. However, the coating manner of the carbon nanotubes is a line contact coating, and the coating contact area is small. Graphene has a two-dimensional nanostructure and a large specific surface area. However, the flexibility and structure adjustability of graphene is worse than that of the carbon nanotube. Therefore, it is difficult to fully cover the surface of nanoparticles of the lithium iron phosphate with graphene.

### SUMMARY OF THE INVENTION

One object of the present application is to provide a method for preparing a lithium iron phosphate material coated with carbon nanoribbon having a high lithium ion conductivity and excellent battery rate performance.

One embodiment of the present application provides a method for preparing a lithium iron phosphate material coated with carbon nanoribbon, including the steps of:
1) fully and uniformly dispersing carbon nanoribbons in an aqueous solution by means of stirring and ultrasonic dispersion, and obtaining a mixture;
2) adding a lithium source, an iron source and a phosphorous source at a molar ratio of Li: Fe: P = 1:1:1 into the mixture of step 1) under the protection of inert gas, adding water and stirring to form a slurry, and refluxing the slurry;
3) washing and drying the slurry to obtain a primary lithium iron phosphate material coated with carbon nanoribbon; and
4) annealing the primary lithium iron phosphate material coated with carbon nanoribbon of step 3) at high-temperature in a protective atmosphere of argon containing 5-10%v/v of hydrogen, and obtaining the lithium iron phosphate material coated with carbon nanoribbon.

Compared with the prior art, in the method for preparing a lithium iron phosphate material coated with carbon nanoribbon according to the present application, the carbon nanoribbon is used as the coating material. The carbon layer of the carbon nanoribbon has an open structure and a larger specific surface area and pore structure than the carbon nanotube, which can provide more reaction interfaces for the lithium ions.

In addition, due to the interaction of large specific surface area and the flexibility between the carbon nanoribbons, a trimensional pore structure and a conductive network structure are formed, which can facilitate the contact between the electrode active material and the electrolyte, so as to shorten transport diffusion paths of the lithium ions and the electrolyte as well as improve the rate performance of the lithium ion battery.

### BRIEF DESCRIPTION OF THE DRAWINGS

FIG.1 depicts a SEM image of a carbon nanoribbon used in Example 1 of the present application;
FIG. 2 depicts a SEM image of a lithium iron phosphate material coated with carbon nanoribbon according to Example 1 of the present application;
FIG. 3 depicts a rate charge performance curve of a lithium ion battery having the lithium iron phosphate material coated with the carbon nanoribbon according to Example 1 of the present application;
FIG. 4 depicts a SEM image of a lithium iron phosphate material coated with carbon nanoribbon according to Example 3 of the present application; and
FIG. 5 depicts cycle performance curves of lithium ion batteries having the lithium iron phosphate material coated with carbon nanoribbon according to Example 1 and Example 4 of the present application.

### DETAILED DESCRIPTION OF PREFERRED EMBODIMENTS

In order that the objects, technical solution and advantageous technical effects of the present invention can be understood more clearly, the present invention will be described in more detail with reference to the accompanying drawings and detailed description. It is to be understood that the specific embodiments described in this specification are for the purpose of explaining the invention and are not intended to be limiting of the invention.

One embodiment of the present application provides a method for preparing a lithium iron phosphate material coated with carbon nanoribbon, including the steps of:
1) fully and uniformly dispersing carbon nanoribbons in an aqueous solution by means of stirring and ultrasonic dispersion, and obtaining a mixture;
2) adding a lithium source, an iron source and a phosphorous source at a molar ratio of Li: Fe: P = 1:1:1 into the mixture of step 1) under the protection of inert gas, adding water and stirring to form a slurry, and refluxing the slurry;
3) washing and drying the slurry to obtain a primary lithium iron phosphate material coated with carbon nanoribbon; and
4) annealing the primary lithium iron phosphate material coated with carbon nanoribbon of step 3) at high-temperature in a protective atmosphere of argon containing 5-10%v/v hydrogen (i.e. the volume ratio of hydrogen in argon is 5-10%), and obtaining the lithium iron phosphate material coated with carbon nanoribbon.

Specifically, the carbon nanoribbon in step 1) has a thickness of 2-30nm. The ratio of width to thickness of the carbon nanoribbon is (10-20):1, and the ratio of width to length of the carbon nanoribbon is 1: (5-25). The solid content of the mixture obtained in step 1) is 2-10wt%. The stirring and ultrasonic dispersion manners in step 1) include stirring and dispersing for 0.5-4h, and carrying out the ultrasonic dispersion for 0.5-4h.

Specifically, the carbon content of the slurry obtained in step 2) is 2-5wt%, the solid content of the slurry is 35-65wt%. The reflux temperature in step 2) is 90-110°C, the reflux time is 4-12h. The lithium source in step 2) is lithium carbonate or lithium hydroxide or lithium dihydrogen phosphate. The iron source in step 2) is iron oxide or ferric phosphate or ferrous oxalate. The phosphate in step 2) is ammonium dihydrogen phosphate or diammonium phosphate or lithium dihydrogen phosphate or ferric phosphate.

Specifically, the annealing temperature in step 4) is 400°C to 1200°C, and the annealing time is 4-16 h.

In the method for preparing a lithium iron phosphate material coated with carbon nanoribbon according to the present application, the carbon nanoribbon is used as the carbon coating material. The carbon layer of the carbon nanoribbon has an open structure and a larger specific surface area and pore structure than the carbon nanotubes, which provides more reaction interfaces for the lithium ions. Meanwhile, due to the interaction of large specific surface area and the flexibility between the carbon nanoribbons, a trimensional pore structure and a conductive network structure are formed, which can facilitate the contact between the electrode active material and the electrolyte, so as to shorten transport diffusion paths of the lithium ions and the electrolyte as well as improve the rate performance of the lithium ion battery.

### EXAMPLE 1

1. Fully and uniformly dispersing carbon nanoribbons in an aqueous solution by stirring and ultrasonic dispersion, wherein the thickness of the carbon nanoribbon is 5-15nm, the ratio of width to thickness of the carbon nanoribbon is (10-15):1, the ratio of width to length of the carbon nanoribbon is 1: (10-20); the solid content of the mixture obtained is 5wt%; the stirring and ultrasonic dispersion manner includes: firstly stirring and dispersing for 2h, and carrying out ultrasonic dispersion for 2h.
2. adding a lithium source, an iron source and a phosphorous source at a molar ratio of Li: Fe: P = 1:1:1 into the mixture of step 1) under the protection of inert gas, adding water and stirring to form a slurry, refluxing the slurry, wherein the carbon content of the slurry is 3wt%, the solid content of the slurry is 45wt%, the lithium source is lithium carbonate, the iron source is ferric oxide and the phosphate is ammonium dihydrogen phosphate; the reflux temperature is 100°C, and the reflux time is 8 h;
3. washing and drying the slurry in step 2) and obtaining a primary lithium iron phosphate material coated with carbon nanoribbon; and
4. annealing the primary lithium iron phosphate material coated with carbon nanoribbon in step 3) at a high-temperature under a protective atmosphere of argon containing 5v/v% hydrogen and obtaining the lithium iron phosphate material coated with carbon nanoribbon, wherein the annealing temperature is 600°C, the annealing time is 8 h.

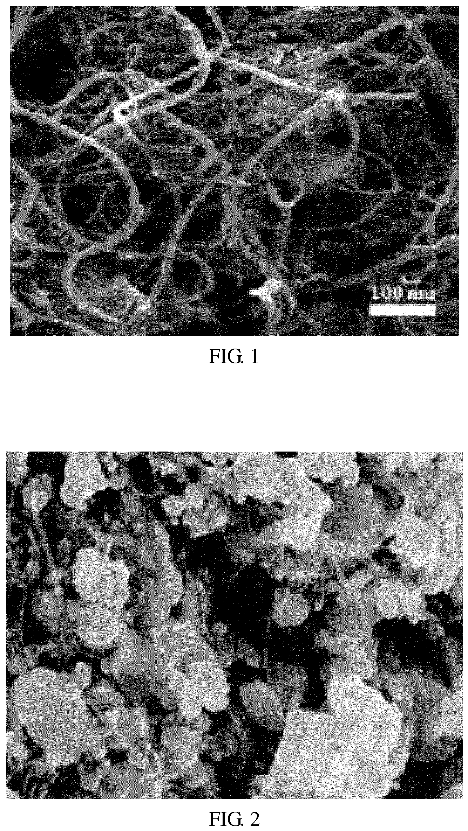

FIG.1 depicts a SEM image of a carbon nanoribbon used in Example 1 of the present application; FIG. 2 depicts a SEM image of a lithium iron phosphate material coated with carbon nanoribbon according to Example 1 of the present application.

### EXAMPLE 2

The method of Example 2 is almost the same as that of Example 1. The difference lies in that the thickness of the carbon nanoribbon in step 1) of Example 2 is 5-10nm, the ratio of width to thickness of the carbon nanoribbon is (15-20):1, the ratio of width to length of the carbon nanoribbon is 1: (10-15).

### EXAMPLE 3

The method of Example 3 is almost the same as that of Example 1. The difference lies in that the solid content of the mixture obtained in Step 1) of Example 3 is 8wt%, the stirring and dispersing time is 1.5h, the ultrasonic dispersion time is 4h;

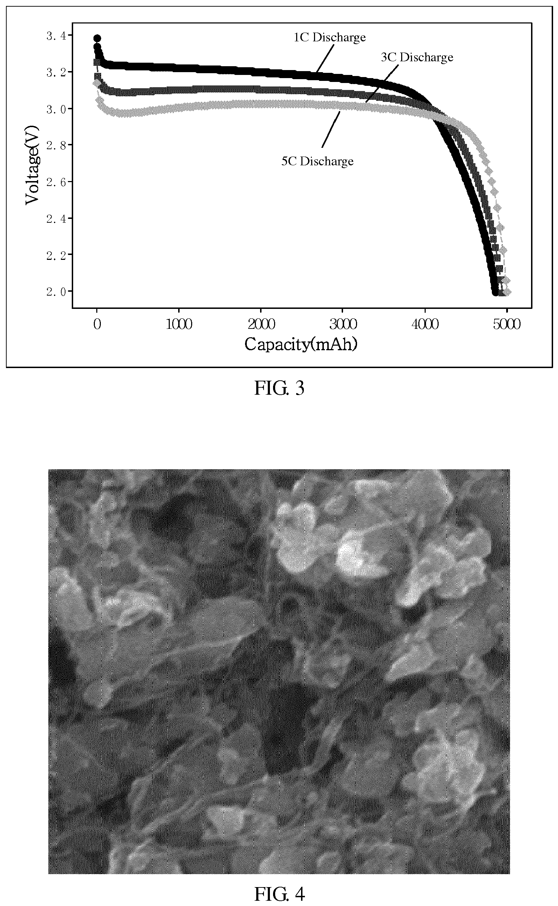

FIG. 4 depicts a SEM image of a lithium iron phosphate material coated with carbon nanoribbon according to Example 3 of the present application.

### EXAMPLE 4

The method of Example 4 is almost the same as that of Example 1. The difference lies in that the weight content of carbon in the slurry formed by the lithium source, the iron source and the phosphorous source in step 2) of Example 4 is 5wt%, and the solid content of the slurry is 50 wt%.

### EXAMPLE 5

The method of Example 5 is almost the same as that of Example 1. The difference lies in that the lithium source and the phosphorus source in step 2) of Example 5 are both lithium dihydrogen phosphate.

### EXAMPLE 6

The method of Example 6 is almost the same as that of Example 1. The difference lies in that the iron source and the phosphorus source in step 2) of Example 6 are both ferric phosphate.

### EXAMPLE 7

The method of Example 7 is almost the same as that of Example 1. The difference lies in that the reflux temperature in step 2) of Example 7 is 110 °C, and the reflux time is 10h.

### EXAMPLE 8

The method of Example 8 is almost the same as that of Example 1. The difference lies in that the annealing temperature in step 4) of Example 8 is 800 °C , and the annealing time is 10h.

FIG. 3 depicts a rate charge performance curve of a lithium ion battery having the lithium iron phosphate material coated with carbon nanoribbon according to Example 1 of the present application. As can be seen from FIG. 3, the lithium ion battery having the lithium iron phosphate material coated with carbon nanoribbon according to Example 1 of the present application has desirable rate performance under the conditions of 1C discharge, 3C discharge and the 5C discharge.

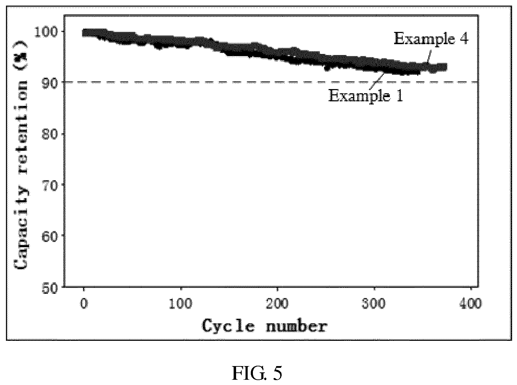

FIG. 5 depicts cycle performance curves of lithium ion batteries having the lithium iron phosphate material coated with carbon nanoribbon in accordance with Example 1 and Example 4 of the present application. As can be seen from FIG. 5, for the lithium ion batteries having the lithium iron phosphate material coated with carbon nanoribbon according to Example 1 and Example 4 of the present application, the capacity retention rates of the lithium ion batteries are still more than 90% when the charging and discharging times are gradually increased, and the lithium ion batteries have good cycle performance.

Though the present invention was shown and described with references to the preferred embodiments, such are merely illustrative of the present invention and are not to be construed as a limitation thereof and the other advantages and modifications can be easily realized by those skilled in the art, the present application in its broader aspects is not limited to the specific details, representative devices and illustrative examples shown and described. Accordingly, departures may be made from such details without departing from the spirit or scope of the applicant's general inventive concept.

## Claims

1. A method for preparing a lithium iron phosphate material coated with carbon nanoribbon, comprising the steps of:
1) fully and uniformly dispersing carbon nanoribbons in an aqueous solution by means of stirring and ultrasonic dispersion, and obtaining a mixture;
2) adding a lithium source, an iron source and a phosphorous source at a molar ratio of Li: Fe: P = 1:1:1 into the mixture of step 1) under the protection of inert gas, adding water and stirring to form a slurry, and refluxing the slurry;
3) washing and drying the slurry to obtain a primary lithium iron phosphate material coated with carbon nanoribbon; and
4) annealing the primary lithium iron phosphate material coated with carbon nanoribbon of step 3) at high-temperature in a protective atmosphere of argon containing 5-10%v/v hydrogen, and obtaining the lithium iron phosphate material coated with carbon nanoribbon.

2. The method for preparing a lithium iron phosphate material coated with carbon nanoribbon of claim 1, wherein the carbon nanoribbon in step 1) has a thickness of 2-30nm, a ratio of width to thickness of the carbon nanoribbon is (10-20):1, and a ratio of width to length of the carbon nanoribbon is 1: (5-25).

3. The method for preparing a lithium iron phosphate material coated with carbon nanoribbon of claim 2, wherein a solid content of the mixture obtained in step 1) is 2-10wt%.

4. The method for preparing a lithium iron phosphate material coated with carbon nanoribbon of claim 3, wherein stirring and ultrasonic dispersion in step 1) comprises stirring and dispersing for 0.5-4h and carrying out ultrasonic dispersion for 0.5-4 h.

5. The method for preparing a lithium iron phosphate material coated with carbon nanoribbon of claim 4, wherein a carbon content of the slurry obtained in step 2) is 2-5wt%, and a solid content of the slurry is 35-65wt%.

6. The method for preparing a lithium iron phosphate material coated with carbon nanoribbon of claim 5, wherein a reflux temperature in step 2) is 90°C to 110°C, and a reflux time is 4-12h.

7. The method for preparing a lithium iron phosphate material coated with carbon nanoribbon of claim 6, wherein an annealing temperature in step 4) is 400-1200 °C , and an annealing time is 4-16h.

8. The method for preparing a lithium iron phosphate material coated with carbon nanoribbon of claim 1, wherein the lithium source in step 2) is lithium carbonate or lithium hydroxide or lithium dihydrogen phosphate.

9. The method for preparing a lithium iron phosphate material coated with carbon nanoribbon of claim 1, wherein the iron source in step 2) is iron oxide or ferric phosphate or ferrous oxalate.

10. The method for preparing a lithium iron phosphate material coated with carbon nanoribbon of claim 1, wherein the phosphate in step 2) is ammonium dihydrogen phosphate or diammonium phosphate or lithium dihydrogen phosphate or ferric phosphate.
